(19) Europäisches Patentamt
European Patent Office
Office européen des brevets

(11) Publication number: **0 437 851 A2**

(12) # EUROPEAN PATENT APPLICATION

(21) Application number: **90125713.9**

(22) Date of filing: **28.12.90**

(51) Int. Cl.5: **C08J 3/21**, C08K 3/08, B29C 43/00

(30) Priority: **10.01.90 JP 1534/90**
**14.08.90 JP 213703/90**

(43) Date of publication of application:
**24.07.91 Bulletin 91/30**

(84) Designated Contracting States:
**BE CH DE FR GB IT LI NL SE**

(71) Applicant: **IDEMITSU KOSAN COMPANY LIMITED**
**1-1, Marunouchi 3-chome Chiyoda-ku**
**Tokyo(JP)**

(72) Inventor: **Kawato, Hiroshi, c/o Idemitsu Kosan Co., Ltd.**
**1280, Kamiizumi, Sodegaura-machi**
**Kimitsu-gun, Chiba-ken(JP)**
Inventor: **Tomioka, Tatsuya, c/o Idemitsu Kosan Co., Ltd.**
**1280, Kamiizumi, Sodegaura-machi**
**Kimitsu-gun, Chiba-ken(JP)**

(74) Representative: **Türk, Gille, Hrabal**
**Brucknerstrasse 20**
**W-4000 Düsseldorf 13(DE)**

(54) **Process for preparation of resin composition for powder molding and process for production of powder molded product.**

(57) There is disclosed a process for preparing a resin composition for powder molding, comprising 50 to 97 wt% of a metal or alloy powder and 50 to 3 wt% of a thermoplastic resin having heat resistance and crystallinity, which process comprises dissolving the thermoplastic resin having heat resistance and crystallinity in a solvent and at the same time, dispersing therein at least one metal or alloy powder selected from iron, brass, nickel silver, stainless steel and aluminum, having an average particle diameter of not more than 500 $\mu m$ to thereby prepare a mixture, and then gassifying or evaporating the solvent of the mixture. In addition, there is disclosed a process for producing a powder molded product which comprises cold compressing molding the above resin composition and then heating the molding at a temperature not less than the melting point of the thermoplastic resin.

This powder molded product has excellent dimensional stability against heat, chemical resistance, and mechanical strength.

EP 0 437 851 A2

# PROCESS FOR PREPARATION OF RESIN COMPOSITION FOR POWDER MOLDING AND PROCESS FOR PRODUCTION OF POWDER MOLDED PRODUCT

## BACKGROUND OF THE INVENTION

### 1. Field of the Invention

The present invention relates to a process for preparation of a resin composition for powder molding and a process for production of a powder molded product. More particularly it relates to a resin composition as a material for production of a powder molded product having heat dimensional stability, chemical resistance, and so forth nearly equal to those to those of a metal, and a process for producing the powder molded product with high productivity and efficiency.

### 2. Description of the Related Arts

In powder metallurgy, a sintered molding has heretofore been produced by a process comprising the steps of compression molding using an organic binder, degreasing, and sintering. This process, however, has disadvantages in that a large amount of energy and a long time are needed at both the degreasing and sintering steps, dimensional accuracy is poor because of its large shrinkage after sintering, and breaking and cracking readily occur.

Moreover those parts which are long, thin or grooved are difficult to produce because of dimensional changes due to shrinkage at the time of sintering.

On the other hand, copper base alloys containing zinc, such as brass and nickel silver, have a disadvantage of shortening the service life of a sintering furnace.

In order to overcome the above problems, Japanese patent Application Laid-Open No. 38641/1976 discloses a molding obtained by a powder metallurgical technique using a thermosetting resin (e.g. epoxy resin ) as a binder. An epoxy resin, however, has disadvantages in that a long time is required for calcination after compression molding, the resulting molding is large in dimensional changes under an atmosphere of high temperature or high humidity as compared with a sintered metal or diecast, which is unsuitable for practical use, and the mechanucal strength of the molding is small.

In order to overcome the above problems, Japanese Patent Application Laid-Open No. 104254/1975 discloses a powder metallurgical technique in which various fine powders are coated with Nylon resin (5 to 35 vol%) and then compression molded to produce a molding, so that the molding can be used as it is without degreasing and sintering. This technique, however, has not been put to practical use because the Nylon resin is poor in heat resistance, mechanical strength and chemical resistance.

For molding, therefore, the powder metallurgical technique has not been applied, and rather injection molding in which a resin content of at least 35 vol% is required has been employed in view of advantages of strength and moldability. For example, composition having a high specific gravity as prepared by charging a metal or metal oxide powder in a high concentration are disclosed in Japanese Patent Application Laid-Open Nos. 258952/1988, 202653/1988, 183956/1988 and 142051/1988. This composition, when charged with a high specific gravity metal such as iron powder or copper powder, is used in production of fly wheel or die cast moldings, and the resulting molding has a mechanical strength comparable with that of a resin and is sufficiently durable for practical use.

In the case of injection molding, suitable fluidity is needed at the time of molding and, therefore, the amount of the powder charged is limited and a high specific gravity composition cannot be attained, by charging the powder in a higher concentration. Even if the high specific gravity is attained, the resulting molding still has a larger coefficient of linear expansion than the metal or die case molding and is increased in the dimensional changes under high temperature conditions, unsuitably for practical use.

Although the injection molding is effectively employed in production of moldings having a complicated shape, in the case of production of a small number of moldings which are simplified in the shape but in various types of shapes, it suffers, from disadvantages in that abrasion of the die due to the charged powder is seriously large, leading to an increase of cost for the maintenance of the die, and no mass production effect can be obtained.

The present inventors made an extensive investigation to overcome the above problems of the prior art and to produce a powder molded product having heat stability and chemical resistance comparable with those of metals, and having a sufficiently high mechanical strength for practical use, with high efficiency.

## SUMMARY OF THE INVENTION

As a result, it has been discovered that the above problems can be overcome by choosing the type of the binder resin and the type and particle size of a powder as a compression molding material, and by modifying a molding method. The present invention has been completed on the findings.

The present invention provides a process for preparing a resin composition for powder molding, comprising 50 to 97 vol% of a metal or alloy powder and 50 to 3 vol% of a thermoplastic resin having heat resistance and crystallinity, which process comprises dissolving the thermoplastic resin having heat resistance and crystallinity in a solvent and at the same time, dispersing therein at least one metal powder selected from iron, brass, nickel silver, stainless steel and aluminum, or an alloy powder containing the metal to prepare a mixture, and then gassifying or evaporating the solvent of the mixture. In place of the gassification or evaporation of the solvent of the mixture, the mixture may be cooled. Moreover the solvent may be gassified or evaporated after cooling the mixture.

The present invention further relates to a process for producing a powder molded product which comprises cold compression molding the above resin composition for powder molding and then heating the resulting molding at a temperature higher than the melting point of the thermoplastic resin having heat resistance and crystallinity.

## DESCRIPTION OF PREFERRED EMBODIMENTS

The metal or alloy powder to be used in the present invention is iron, brass, nickel silver, stainless steel or aluminum, or a mixture comprising two or more thereof.

Iron includes various ones such as electrolytic iron, carbonyl iron, atomized iron, Permalloy (Fe-Ni base alloy), and Sendust (Fe-Si-Al base alloy). More specifically, low carbon steel, medium carbon steel, high carbon steel, high tension steel (HT80), manganese steel for mechanical structures, chromium steel (SCr430), chromium molybdenum steel (SCM440), nickel chromium steel, case hardened steel, low temperature steel, marageing steel (250), high manganese steel (Hadfield steel), Inconel 600, Inconel X750, Incoly 800, Hastelloy X, Sterite 6B, Nimonic alloy 80A, tool steel (SKD6), grey cast iron, spherical graphite cast iron, black heart malkable cast iron, and the like can be used.

Brass includes 7/3 brass (C2600), 65/35 brass (C2680), 6/4 brass (C2801), free cutting grass (C3710), Naval brass (C4621), and the like.

Nickel silver includes nickel silver (C7521) and the like.

Stainless steel includes martensite base stainless steel (SUS410), ferrite base stainless steel (SUS405), austenite base stainless steel (SUS304), precipitation hardening type stainless steel (SUS631), SUS314, SUS316, and the like.

Aluminum includes industrial pure aluminum (Al 100 H18), duralmin (A2017-T4), super duralmin (A2024-T4), ultra super duralmin (A7075-T6), anti-corrosion aluminum (A5083-H32), anti-corrosion aluminum (a6063-T6), Lautal (AC2A-T6), silumin (AC3a-F), aluminum casting alloy (AC4CH-T6), aluminum diecast alloy (ADC12), and the like.

In connection with the particle size distribution (compression density) of the above metal or alloy powder, in order to increase the molding density and to decrease the amount of voids formed during molding, thereby increasing the mechanical strength, it is preferred that the particle size distribution be higher. It is desirable that the particle size distribution is broad. Although it is desirable that the particle form is spherical, in some case, a mixture of particles which are irregular and uneven in shape is preferably used. The average particle diameter of the metal or alloy powder is not more than 500 $\mu$m, preferably not more than 200 $\mu$m, and more preferably not more than 50 $\mu$m.

For production of structural members such as mechanical parts which are required to have a high mechanical strength, metal powder particles are suitable. As the powder particles, a mixture of particles which are irregular and uneven in the shape is preferably used, and the width of distribution of particle diameters is preferably from about 37 to 150 $\mu$m.

An apparent density is a physical property of a powder which reflects the particle shape, and it is specified by JIS Z2504-1979.

For example, reduced iron powder (apparent density: 2.3 to 2.8, preferably 2.6 to 2.8, and more preferably 2.7), brass 98, 95, 90, 80, 70, 60 wt% (Cu), or nickel silver (apparent density: 2.5 to 3.0, preferably 2.6 to 2.8, and more preferably 2.7), industrial pure aluminum (purity at least 98%) (apparent density: 0.5 to 2.0, preferably 0.8 to 1.5 and more preferably 1.0), and stainless steel (SUS 314, SUS 316, etc.) (apparent density: 2.5 to 3.0, preferably 2.6 to 2.8, and more preferably 2.7) are suitable.

The metal or alloy powder surface-treated with not more than 3 vol%, particularly about 0.5 to 2 vol% of

a coupling agent may be used. This surface treatment increase the affinity of the metal or alloy powder to the thermoplastic resin having heat resistance and crystallinity. Moreover it is effective in preventing oxidation of the metal or alloy powder.

Various coupling agents can be used for the above purposes. Typical examples are titanate-based coupling agents and silane-based coupling agents. Examples of the titanate-based coupling agents are isopropyltriisostearoyl titanate, isopropyltrioctannoyl titanate, isopropyltris(dioctypyrophosphate) titanate, isopropyldimethacrylisostearoyl titanate, isopropyltri(N-aminoethyl-aminoethyl) titanate, isopropyltridecylbenzenesulfonyl titanate, isopropylisostearoyldiacryl titannate, isopropyltri(dioctylphosphate) titanate, isopropyltricumylphenyl titanate, tetraisopropylbis(dioctylphosphite) titanate, tetraoctylbis(ditridecylphosphite)titanate, tetra(2,2-diallyloxymethyl-1-buty)bis(ditridecyl)phosphite titanate, bis(dioctylpyrophosphate)oxyacetate titanate, and bis(dioctypyrophosphate)ethylene titanate. These compounds can be used singly or in combination with each other.

Examples of the silane-based coupling agents are γ-mercapto-propyl-trimethoxysilane, 2-styryl-ethyltrimethoxysilane, N-β-(aminoethyl) γ-amino-propyl-trimethoxysilane, β-(3,4-epoxycyclohexyl)ethyl-trimethoxysilane, γ-aminopropyl-trimethoxysilane, γ-glycidoxy-propyltrimethoxysilane, N-phenyl-γ-amino-propyltrimethoxysilane, phenyltrimethoxysilane, and methyldimethoxysilane. These compound can be used singly or in combination with each other.

The titanate-based coupling agent and the silane-based coupling agent can be used in combination.

The surface treatment with the coupling agent may be carried out by wetting the metal or alloy powder with a 5 to 20 vol% solution of the coupling agent in a solvent such as alcohol or toluene and then drying at a temperature not less than room temperature, preferably at 120 to 150 °C. This surface treatment with the coupling agent imparts water repellency and lubricity to the powder and increases the mechanical strength and so forth of the resin binder-type molding obtained after molding.

As the thermoplastic resin having heat resistance and crystallinity to be used in the present invention, various resins can be used. Usually those resins having a melting point of at least 200 °C, particularly at least 230 °C are preferred, and those resins having at least one -S- bond or -O- bond in the chemical skeleton thereof are particularly suitable.

Preferred examples of such thermoplastic resins are polyethertherketone (PEEK), polyetherketone (PEK), polyphenylenesulfide (PPS), polysukfideketone (PSK), and polycyanoarylether (polyethernitrile; PEN). As the PEN, a polycyanoarylether-based polymer having a repeating unit represented by the general formula:

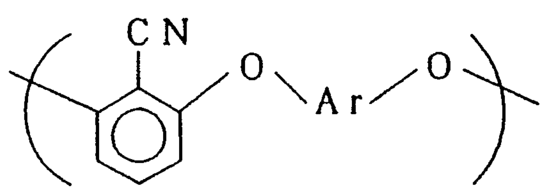

wherein Ar is

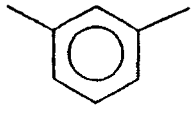 , 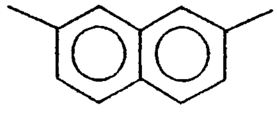 , 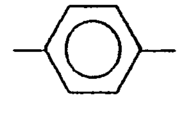

or

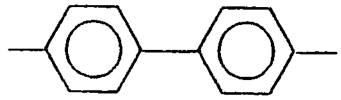 ,

and an intrinsic viscosity [$\eta$] at 60 °C with p-chlorophenol as a solvent of at least 0.2 dl/g is particularly preferred.

The molecular weight of the thermoplastic resin having heat resistance and crystallinity is not critical and can be determined appropriately depending on the type, purpose of use, etc. If the molecular weight is too large, an application pressure for molding as described hereinafter is increased, the resin is not easily plasticized by application of pressure, the original shape is sometimes recovered, and the density of the molding is not increased and voids are formed, leading to a decrease in the mechanical strength. On the other hand, if the molecular weight is too small, not only resin coating becomes difficult but the mechanical strength of the molding is decreased. Thus taking these points into consideration, the molecular weight of the resin should be determined.

For example, in the case of PPS, the intrinsic viscosity in an $\alpha$-chloronaphthalene solvent at 206 °C is preferably at least 0.1 dl/g and particularly preferably 0.15 to 0.3 dl/g. In the case of PEEK, the intrinsic viscosity in a p-chlorophenol solvent at 60 °C is preferably at least 0.3 dl/g and particularly preferably 0.3 to 0.85 dl/g. In the case of PEN, the intrinsic viscosity in a p-chlorophenol solvent at 60 °C is preferably at least 0.2 dl/g and particularly preferably 0.3 to 1.2 dl/g.

In accordance with the process of the present invention, 50 to 97 vol%, preferably 65 to 90 vol% of the metal or alloy powder and 50 to 3 vol%, preferably 35 to 10 vol% of the thermoplastic resin having heat resistance and crystallinity are used. If the resin or alloy powder is less than 50 vol% (based on the total volume of the metal or alloy powder and the thermoplastic resin), the resin amount is suitable for injection molding rather than for compression molding of powder. On the other hand, if it is more than 97 vol%, molding becomes difficult. In either case, the objects of the present invention cannot be attained.

In structural materials such as mechanical parts for which a high mechanical strength is required, as well as the mechanical strength, a coefficient of linear expansion, hardness, a variation in dimension due to water absorption, etc. are required to be more similar to those of metal. When the above metal or alloy powder is used, the proportion is preferably 3 to 15 vol% (based on the total volume of the metal or alloy powder and the above thermpolastic resin). If the proportion is less than 3 vol%, the strength is not sufficiently high, and if it is more than 15 vol%, the strength is rather decreased. It is preferably 5 to 10 vol%.

In the process for preparation of the resin composition for powder molding of the present invention, the metal or alloy powder and the thermoplastic resin are used in the aforementioned ratios. In the first place, the thermoplastic resin is dissolved in the solvent. As the solvent to be used, a polar solvent having a high ability to dissolve the above resin is preferably used. Examples are N-methylpyrrolidone, $\alpha$-chloronaphthalene, dichloroacetic acid, 1,3-dimethyl-2-imidazolidinine, dimethylsulfoxide, dimethylacetamide, dimethylformamide, and p-chlorophenol.

The type of the solvent to be used varies with the type and molecular weight of the resin to be used and cannot be determined unconditionally. Usually it is preferred that when PPS is used as the resin, $\alpha$-chloronaphthalene is used, and when PEEK is used as the resin, dichloroacetic acid and $\alpha$-chloronaphthalene are preferably used.

The amount of the solvent used varies with the amount of the resin charged, and the type, particle size distribution, wetting properties, adhesion to the resin of the metal or alloy powder. In order to decrease the coagguration among powder particles, it is preferred that the concentration of the mixture obtained by dispersing the powder in the resin solution is as low as about 5 to 50 wt%. Thus it is desirable that the ratio of the resin to the solvent (dl) be 0.1 to 15 (g/dl).

The resin can be dissolved in the solvent by introducing the solvent and the powder resin into a suitable stirring vessel and heating while stirring. In connection with the heating temperature, it is desirable that when N-methylpyrrolidone is used as the solvent, the heating temperature be at least 190 °C, and when $\alpha$-chloronaphthalene is used, it be at least 250 °C. This heating and stirring is preferably carried out until the resin is uniformly dissolved.

In accordance with the process of the present invention, the metal or alloy powder is dispersed in the above prepared resin solution to prepare a mixture. Thereafter the solvent of the mixture is gassified or evaporated. Gassification or evaporation of the solvent results in deposition of the thermoplastic resin on the metal or alloy powder. More specifically, for example, a mixed slurry (mixture) of the powder, the resin solution, and a low boiling solvent having a high ability to dissolve therein the resin is sent with a pomp to a heating tube which is overheated to more than the azeotropic point the mixed solvent, and explosively jetted into a room at a high temperature and in vacuum to thereby evaporate or gassify the solvent in a moment.

When it is difficult to choose the mixed solvent with a low boiling solvent having a high ability to dissolve the resin, even if a good solvent is used alone, the gassification or evaporation can be carried out in a moment as long as both the temperatures of the heating tube and the room maintained at a high

temperature and in vacuum are more than the boiling point of the solvent.

As an apparatus for the above operation, Cracks System (instaneous vacuum drying apparatus) manufactured by Orient Chemical Industry Co., Ltd., for example, can be employed. In addition, merely by vacuum drying at a temperature of more than 100° C, dispersing and mixing can be carried out while removing the solvent. In this case, for example, a high-speed agitation type mixer such as a Henshel mixer, High-speed mixer or Super mixer, and a knead extrusion maching can be employed.

In the process of the present invention, in place of the gassification or evaporation of the solvent, the mixture may be cooled. It is also possible that after the mixture is cooled, the solvent is gassified or evaporated. In the case of cooling, the resin can be deposited on the powder by cooling a heat solution of the resin (a mixture obtained by dispersing the metal or alloy powder in the solution with the resin dissolved therein), and then decreasing the solubility of the resin. A low molecular weight component which cannot be deposited from the solution can be deposited by adding a poor solvent. Also, after cooling, the gassification or evaporation of the solvent may be carried out.

More specifically, a heat solution of the resin uniformly dissolved in a jacketed stirring vessel and the powder are mixed, and the mixture is cooled to room temperature by flowing cooling water in the jacket while dispersing and stirring by the use of a wet dispersion-stirring machine.

In addition, by removing the solvent in a vacuum produced by a vacuum pump while dispersing and mixing with the dispersion stirring machine, almost all of the resin can be deposited and coated.

As the above wet dispersion stirring machine, for example, Ultra Homomixer manufactured by Nippon Seiki Seisakujo Co., Ltd., Ultra Disperser manufactured by IKA Co., Ltd., High-Speed Mixer manufactured by Fukae Kogyo Co., Ltd., and a universal mixing stirring machine manufactured by Shinagawa Seisakujo Co., Ltd.

The cooling speed and the deposition time can be determined appropriately because the time required for the deposition varies with the dissolution ability of the resin and the dissolution conditions. Usually it is preferred that after cooling to room temperature in a time of 1 to 2 hours, the deposition is accomplished over at least one hour. If the deposition time is not provided, deposition of the resin is sometimes retarded by the supercooled state.

Poor solvents which can be used include water, methanol, isopropyl alcohol, acetone, and toluene.

Particularly in the case of a concentrated solution of the resin, cooling is carried out as follows.

On cooling a heat solution of the high concentration resin solution, it becomes a solid material such as wax or soap rather than gelatin-like. By utilizing these physical properties, coating the powder with the resin and granuation can be carried out at the same time. That is, the heat solution of the resin is cooled while dropping on the powder previously heated to the same temperature as that of the heat solution, while dispersing and stirring at a high speed, whereby the resin is coated on the powder and, if necessary, granuation can be carried out at the same time by deposition and solidification of the resin.

As the stirring dispersion machine to be used in this case, for example, a high-speed agitation type dispersing machine such as a Henschel mixer, a high speed mixer or a super mixer can be employed.

The concentration of the resin solution is preferably at least 2 g/dl. If the concentration is less than 2 g/dl, it becomes gelatin-like, and thus aggregation cannot be avoided and it becomes difficult to carry out coating and granulation at the same time. In this process, productivity can be increased by decreasing the amount of the solvent as much as possible, but if the amount of the solvent is decreased excessively, the resin is not completely dissolved in the solvent and no uniform solution can be obtained. That is, a concentration of the solution at which coating and granulation can be easily carried out at the same time within the range that the resin is uniformly dissolved in the solvent is chosen appropriately. Usually it is preferred that the concentration be adjusted to 5 to 25 g/dl. By vacuum drying at a temperature of more than 100° C while carrying out dispersion and granulation in the mixer at the same time, the solvent can be removed.

In this manner, the resin composition for powder molding can be prepared. In accordance with the process for production of powder molded products in the present invention, a resin coated (or attached) powder material as prepared by the above process is granuated or pulverized, if necessary, and then compression molded. This compression molding is not critical as long as it is carried out under pressure. From a viewpoint of productivity, cold compression molding as a powder metallurgical technique is preferably employed. Hot compression molding at a temperature at which the resin melts can be also employed. In this cold compression molding, the molding pressure is sufficient to be not less than a pressure at which the binder resin begins to undergo plastic deformation. Usually the pressure can be chosen appropriately within the range of at least 1 ton/$cm^2$. In particular, when a metal powder for the above structural material is used as the metal powder and relatively porous parts such as oil-containing bearings are intended to produce, the pressure is preferably 2 to 3 ton/$cm^2$. In the case of mechanical parts not

containing oil, the pressure is preferably 4 to 6 ton/cm$^2$. That is, the porosity of the product can be controlled by adjusting the pressure to be applied at the time of powder molding.

Although the temperature is usually preferred to be room temperature from a viewpoint of productivity, a temperature falling between the glass transition temperature and the melting point of the resin can be selected. In order to increase the molding density, it is preferably at least 100°C. This cold compression causes plastic deformation of the binder resin and presses it under pressure, increasing the strength of the resulting molding. As a result, a resin binder-type molding having excellent physical properties can be obtained.

After compression molding, heat treatment is applied, if necessary. For this heat treatment, it suffices that the molding is exposed for several minutes at a temperature not less than the softening (fluidizing) temperature or melting point of the resin. In this heat treatment, recombination proceeds as a result of melting and crystallization of the resin, and the strength of the resin binder-type molding is more increased.

The heat treating temperature is preferably not less than the melting point or glass transition temperature of the resin. For example, in the case of PEEK, it is 360 to 450°C and preferably 400 to 420°C; in the case of PPS, it is 290 to 380°C and preferably 360 to 380°C; in the case of PEN-R, it is 350 to 400°C and preferably 360 to 380°C; and in the case of PEN-N, PEN-H and PEN-B, it is 360 to 400°C and preferably 370 to 380°C.

(1) PEN-R, (2) PEN-N, (3) PEN-H and (4) PEN-B as used herein refers to, respectively, (1) a polymer of 2,6-dichlorobenzonitrile and resorcinol, (2) a polymer of 2,6-dichlorobenzonitrile and dihydroxynaphthalene, (3) a polymer of 2,6-dichlorobenzonitrile and hydroquinone, and (4) a polymer of 2,6-dichlorobenzonitrile and biphenol.

Powder molded products obtained by the process of the present invention can be used as mechanical parts; any powder molded products can be used as long as they have the same shapes as those of mechanical parts produced by the powder metallurgical technique.

The process of the present invention permits production of long, thin and grooved products which have been impossible or difficult to produce by powder metallurgical sintering. Molding conditions and so forth can be determined appropriately depending on their application. Typical examples of such applications are a cam, a sprocket, a bulb plate, a bracket, a gasket, a washer, a crank rod, a gear, a magnet cratch, a pulley, a fly wheel, a rim, a frame, a hook lever, a key groove, a handle, a switch knob, a volume knob, an oil-containing bearing, a hinge, a motor cover, a transformer cover, an arm, a handle, a pin, a valve, a link, a bearing retainer, a coil bobbin, a slit, an impeller, a fly wheel, a shaking spindle, a lens receiver, and a tool.

Powder molded products obtained using soft magnetic powder can be used as dust cores or magnet shielding materials. These can be used as magnetic cores for electromagnetic deflection-type Braun tube yokes, reactors, transformers, noise filters, choke coils, and so forth.

As described above, the present invention enables to produce molded products having excellent heat dimensional stability, chemical resistance and mechanical strength, with high productivity.

## EXAMPLES

Resin compositions were prepared using metal or alloy powders, thermoplastic resins and fiber reinforcing materials as shown below. In this preparation, a dispersing machine, High-Speed Mixer (FS-GS-1, manufactured by Fukae Kogyo Co., Ltd.) was used.

(1) Thermoplastic Resins
PPS (produced by Idemitsu Petrochemical Co., Ltd.)
Intrinsic viscosity: 0.2 dl/g (260°C, α-chloronaphthalene)
PEEK (produced by Mitsui Toatsu Co., Ltd.)
Intrinsic viscosity: 0.85 dl/g (60°C, p-chlorophenol)
PEN-R (produced by Idemitsu Kosan Co., Ltd.)
Intrinsic viscosity: 0.97 dl/g (60°C, p-chlorophenol)
PEN-N (produced by Idemitsu Kosan Co., Ltd.)
Intrinsic viscosity: 0.8 dl/g (60°C, p-chlorophenol)
PEN-H (produced by Idemitsu Kosan Co., Ltd.)
Intrinsic viscosity: 1.5 dl/g (60°C, p-chlorophenol)
PEN-B (produced by Idemitsu Kosan Co., Ltd.)
Intrinsic viscosity: 1.5 dl/g (60°C, p-chlorophenol)

(1) PEN-R, (2) PEN-N, (3) PEN-H and (4) PEN-B as used herein refers to, respectively, (1) a polymer of

2,6-dichlorobenzonitrile and resorcinol, (2) a polymer of 2,6-dichlorobenzonitrile and dihydroxynaphthalene, (3) a polymer of 2,6-dichlorobenzonitrile and hydroquinone, and (4) a polymer of 2,6-dichlorobenzonitrile and biphenol.

(2) Coupling Agents

Silane coupline agent (N-β-aminoethyl-γ-aminopropyltrimethoxysilane, produced by Nippon Yunicar Co., Ltd.)

(3) Metal or Alloy Powders

| Type | Average Particle Diameter (μm) |
|---|---|
| Iron powder | 10 |
| Aluminum powder | 5.3 |
| Permalloy powder | 5 |
| Nickel silver powder | 5 |
| Brass powder | 7 |
| Carbon steel | 5.0 |

All were produced by Takeuchi Kinzoku Hakufun Kogyo Co., Ltd.
Metal powders tested for the structural material are shown below.

| Type | Apparent Density | Particle Size Distribution Range (μm) | Lot No. |
|---|---|---|---|
| Reduced iron powder*1 | 2.7 | 37-150 | Fe-1 |
| Reduced iron powder*2 | 2.3 | 80-150 | Fe-2 |
| Brass*2 | 2.7 | 37-150 | Brass-3 |
| Nickel silver | 2.7 | 37-150 | Nickel Silver |
| Aluminum | 1.0 | 37-60 | Al-1 |
| Stainless steel*3 | 2.7 | 37-150 | SUS-1 |
| Stainless steel*3 | 2.3 | 80-180 | SUS-2 |

*1 Produced by Takeuchi Kinzoku Hakufun Kogyo Co., Ltd.

*2 Containing 60 wt% of Cu

*3 SUS 314

Inorganic powders tested for the magnetic core are shown below.

| Type | Supplier | Particle Size Distribution Range (μm) |
|---|---|---|
| Permalloy | Takeuchi Kinzoku Hakufun Co., Ltd. | 38-150 |
| Mo-Permalloy | Takeuchi Kinzoku Hakufun Co., Ltd. | 38-150 |
| Amorphous Alloy | Riken Co., Ltd. | 38-150 |
| Carbonyl Iron Powder C | Takeuchi Kinzoku Hakufun Co., Ltd. | average particle diameter 8 |
| Mn-Zn Ferrite | Toda Kogyo Co., Ltd. | average particle diameter 3.5 |
| Sendust | Takeuchi Kinzoku Hakufun Co., Ltd. | average particle diameter 5 |

The resin compositions for the structural material and magnetic core were prepared by the following method.

The metal powder was previously subjected to coupling treatment. The amount of the coupling agent used in the treatment was 0.5 wt% of the metal powder. Under an atmosphere of nitrogen stream, the resin and the coupling agent (1 wt% based on the powder) were dissolved in 500 ml of the solvent in the High-Speed Mixer while dispersing to prepare a resin solution. Then the metal powder (the total amount of the resin and the metal powder was 1 kg) was introduced into the resin solution and then mixed and dispersed for ten minutes while stirring with an agitator at 1,000 rpm. While stirring with the agitator at 1,000 rpm, the mixture was once cooled to room temperature, and then the solvent was removed at 100 to 180 °C under a reduced pressure of 10 mmHg to obtain a resin-coated powder.

The type of the resin used, and dissolving conditions are shown below.

| | Solvent | Temp. (°C) |
|---|---|---|
| PPS | α-Chloronaphthalene | 250 |
| PEEK | α-Chloronaphthalene | 250 |
| PEN-R | N-methylpyrrolidone | 190 |
| PEN-B | N-methylpyrrolidone | 190 |
| PEN-H | N-methylpyrrolidone | 190 |
| PEN-N | N-methylpyrrolidone | 190 |

The resin-coated powder obtained above was compression molded at room temperature under a pressure of 5 ton/cm$^2$ and then was subjected to heat treatment for 10 minutes.

The compression molded product of the composition for the structural material was measured for cohesive force and tensile strength.

These measurements were conducted under the following conditions.

| | |
|---|---|
| Cohesive force; | JIS R1601 |
| Tensile strength; | JSPM Standard 2-64 |
| Hardness; | JIS Z 2245 |
| | JIS Z 2244 |

These results are shown in Table 3.

The resin composition for the magnetic core was measured for coefficient of linear expansion, heat distortion temperature, and magnetic characteristics.

These measurements were conducted under the following conditions.

| | |
|---|---|
| Coefficient of linear expansion; | ASTM-D 648 |
| Heat distortion temperature; | ASTM-D 696 |
| Dimensional change due to water absorption; | room temperature, equilibrium |
| Magnetic characteristics; | After fabrication of a magnetic core, an AC initial permeability was measured at a frequency of 100 Hz with an LRC meter. |

These results are shown in Table 4.

(4) Fiber Reinforcing Material

| | |
|---|---|
| Glass Fiber (GF) : | TP76 produced by Nippon Itagarasu Co., Ltd., diameter 13 $\mu$m, length 3 mm |
| Carbon fiber (CF): | T300 produced by Toray Co., Ltd., diameter 7 $\mu$m, length 3 mm |

Preparation of Resin Composition (Resin-Coated Powder)

Under an atmosphere of nitrogen stream, 1 liter of a resin solution prepared by dissolving the resin and the coupling agent (1 wt% based on the powder) was added to the powder and reinforcing fiber in the High-Speed Mixer (150 °C) while stirring with an agitator (1,000 rpm), and mixed and dispersed for 5 minutes. Then, the solvent was removed at 150 °C and under a reduced pressure of 10 mmHg to obtain a resin-coated powder. The slurry concentration was such that irrespective of the specific gravity of the powder and the amount of the resin, the solvent was 1 liter per kilogram of the total amount of the powder and the resin.

The type of the resin used and the dissolving conditions were as follows.

PPS (produced by Idemitsu Petrochemical Co., Ltd.): temperature 250 °C, solvent $\alpha$-chloronaphthalene

PEEK (produced by Mitsui Toatsu Co., Ltd ): temperature 250 °C, solvent $\alpha$-chloronaphthalene

PEN-R (produced by Idemitsu Kosan Co., Ltd.): temperature 190 °C, solvent N-methyl-2-pyrrolidone

The resin-coated powder obtained above was compression molded at room temperature under a pressure of 5 ton/cm$^2$.

The compression molded product was measured for heat distortion temperature, coefficient of linear expansion, and chemical resistance. The results are shown in Tables 1 and 2.

These measurements were conducted under the following conditions.

Heat distortion temperature: ASTM D-648

Coefficient of linear expansion: Measured at 30 to 150 °C according to ASTM D-696.

Chemical resistance: According to JIS-K7114, an examination with the eye and a measurement of dimensional changes were conducted.

Table 1

| Chemical | Chemical Resistance |
|---|---|
| Hydrochloric acid (10%) | ◎ |
| Sulfuric acid (10%) | ◎ |
| Diluted nitric acid (5%) | ◎ |
| Sodium hydroxide (50%) | ◎ |
| Concentrated ammonia water | ◎ |
| Sodium chloride (saturated) | ◎ |
| Potassium carbonate (saturated) | ◎ |
| Formic acid (10%) | ◎ |
| Acetic acid | ◎ |
| Pyridine | ◎ |
| Benzene | ◎ |
| Toluene | ◎ |
| Xylene | ◎ |
| Methyl alcohol | ◎ |
| Butyl alcohol | ◎ |
| Formalin | ◎ |
| Acetone | ◎ |
| Methyl alcohol | ◎ |
| Ethyl acetate | ◎ |
| Diethyl ether | ◎ |
| Trichloroethylene | ◎ |
| Carbon tetrachloride | ◎ |

◎ : No change in weight and dimensions

Table 2

| Resin | | Filler | | Fiber Reinforcing Material | | Weight Fraction | | | Composition | |
|---|---|---|---|---|---|---|---|---|---|---|
| Type of Resin | Volume Fraction (vol%) | Type of Filler | Volume Fraction (vol%) | Type of Fiber | Volume Fraction (vol%) | Resin (wt%) | Filler (wt%) | Fiber (wt%) | Coefficient of Linear Expansion ($10^{-5}$/°C) | Heat Distortion Temperature (°C) |
| PEN-R | 10 | Iron powder | 75 | GF | 15 | 2.06 | 91.99 | 5.95 | 2.01 | 315 |
| PEN-R | 10 | Iron powder | 75 | CF | 15 | 2.09 | 93.50 | 4.40 | 2.01 | 318 |
| PEN-R | 10 | Al powder | 90 | — | — | 5.15 | 94.85 | 0.00 | 2.60 | 310 |
| PEN-R | 10 | Al powder | 75 | CF | 15 | 5.42 | 83.18 | 11.40 | 2.94 | 305 |
| PEN-R | 10 | Carbon steel | 90 | — | — | 1.84 | 98.16 | 0.00 | 1.42 | 310 |
| PEN-R | 35 | Carbon steel | 65 | — | — | 8.31 | 91.69 | 0.00 | 2.31 | 304 |
| PEN-R | 10 | Permalloy | 90 | — | — | 1.67 | 98.33 | 0.00 | 1.54 | 312 |
| PEN-R | 35 | Permalloy | 65 | — | — | 7.59 | 92.41 | 0.00 | 2.39 | 303 |
| PEN-R | 10 | Brass | 90 | — | — | 1.69 | 98.31 | 0.00 | 2.25 | 311 |
| PEN-R | 35 | Brass | 65 | — | — | 7.69 | 92.31 | 0.00 | 2.00 | 303 |
| PEEK | 10 | Nickel silver | 90 | — | — | 1.62 | 98.38 | 0.00 | 2.00 | 312 |
| PEEK | 35 | Nickel silver | 65 | — | — | 7.40 | 92.60 | 0.00 | 2.72 | 304 |

Table 3

| No. | Metal Powder | Resin | Amount of Resin (vol%) | Amount of Resin Charged (g) | Pressure Applied (ton/cm$^2$) | Heat Treatment Temperature (°C) | Cohesive Force (kg/cm$^2$) | Hardness | Coefficient of Thermal Expansion ($10^{-5}$/°C) | Heat Distortion Temperature (°C) |
|---|---|---|---|---|---|---|---|---|---|---|
| Example 1 | Fe-1 | PEEK | 5 | 9.4 | 5 | 410 | 1300 | 68*3 | 1.4 | 330 |
| Example 2 | Fe-1 | PEEK | 10 | 19.6 | 5 | 410 | 1600 | 70*3 | 1.5 | 325 |
| Example 3 | Fe-1 | PEEK | 20 | 43.2 | 5 | 410 | 900 | 54*3 | 1.9 | 310 |
| Example 4 | Fe-1 | PEEK | 2 | 3.5 | 5 | 410 | 400 | 69*3 | 1.2 | 310 |
| Example 5 | Fe-1 | PEEK | 50 | 156.6 | *1 | *1 | 1600 | 100*4 | 3.0 | 280 |
| Example 6 | Fe-1 | — | 0 | 0 | 5 | 410 | 350 | 23*3 | 1.4 | — |
| Example 7 | Fe-1 | PEN-R | 5 | 9.4 | 5 | 370 | 1400 | 70*3 | 1.2 | 330 |
| Example 8 | Fe-1 | PEN-R | 10 | 19.6 | 5 | 370 | 1700 | 73*3 | 1.5 | 335 |
| Example 9 | Fe-1 | PEN-R | 20 | 43.2 | 5 | 370 | 950 | 60*3 | 1.7 | 330 |
| Example 10 | Fe-1 | PEN-R | 2 | 3.5 | 5 | 370 | 430 | 69*3 | 1.2 | 315 |
| Example 11 | Fe-1 | PEN-R | 50 | 146.6 | *1 | *5 | 1640 | 120*4 | 2.9 | 290 |
| Example 12 | *2 | PEN-R | 10 | 19.6 | 5 | 410 | 560 | 68*3 | 1.5 | 300 |
| Example 13 | Fe-1 | PPS | 10 | 19.6 | 5 | 370 | 1300 | — | 1.3 | 280 |
| Example 14 | Fe-1 | PEN-H | 10 | 19.6 | 5 | 390 | 1400 | — | 1.5 | 345 |
| Example 15 | Fe-1 | PEN-B | 10 | 19.6 | 5 | 390 | 1500 | — | 1.4 | 355 |
| Example 16 | Fe-2 | PEN-R | 10 | 19.6 | 5 | 370 | 1800 | — | 1.4 | 335 |
| Example 17 | Fe-2 | PEEK | 10 | 19.6 | 5 | 410 | 1700 | — | 1.5 | 325 |
| Example 18 | Fe-2 | PEN-N | 10 | 19.6 | 5 | 380 | 1650 | — | 1.6 | 350 |
| Example 19 | Fe-2 | PEN-B | 10 | 19.6 | 5 | 380 | 1680 | — | 1.6 | 355 |
| Example 20 | Fe-2 | PPS | 10 | 19.6 | 5 | 380 | 1450 | — | 1.3 | 280 |
| Example 21 | Fe-2 | PEN-H | 10 | 19.6 | 5 | 380 | 1500 | — | 1.6 | 340 |
| Example 22 | Aluminum | PEN-R | 10 | 50.6 | 5 | 370 | 1760 | — | 2.5 | 330 |
| Example 23 | Nickel silver | PEN-R | 10 | 16.8 | 5 | 410 | 1580 | — | 2.1 | 325 |
| Example 24 | Brass | PEN-B | 10 | 17.4 | 5 | 380 | 1630 | — | 2.2 | 355 |
| Example 25 | Brass | PEEK | 10 | 17.8 | 5 | 380 | 1580 | — | 2.4 | 325 |
| Example 26 | SUS 1 | PEN-H | 10 | 18.2 | 5 | 380 | 1720 | — | 1.9 | 354 |
| Example 27 | SUS 2 | PEN-R | 10 | 18.2 | 5 | 380 | 1800 | — | 2.2 | 345 |

*1 Heat press molding at 410°C and 400 kg/cm$^2$ followed by crystallization at 260°C.

*2 Atomized iron powder (spherical) having an average particle diameter of 10 μm was used.

*3 Rockwell, F scale *4 Rockwell, M scale

*5 Heat press molding at 360°C and 400 kg/cm$^2$ followed by crystallization at 260°C.

Table 4

| No. | Soft Magnetic Powder | Resin | Amount of Resing (vol%) | Amount of Resin Charged (g) | Heat Treatment Temperature (°C) | Heat Distortion Temperature (°C) | Coefficient of Linear Expansion ($10^{-5}$/°C) | Change in Dimensions due to Water Absorption (%) | Initial Permeability ($\mu_{iac}$) | Volume Specific Resistance (Ω·cm) |
|---|---|---|---|---|---|---|---|---|---|---|
| Example 1 | Permalloy | PEEK | 10 | 16.7 | 410 | 320 | 1.54 | 0.01 | 75 | 0.4 |
| Example 2 | Permalloy | PPS | 10 | 16.7 | 370 | 260 | 1.53 | < 0.01 | 73 | 0.4 |
| Example 3 | Permalloy | PEN-R | 5 | 8.13 | 380 | 330 | 1.24 | < 0.01 | 80 | 0.2 |
| Example 4 | Cendust | PEN-R | 10 | 20.5 | 370 | 335 | 1.93 | < 0.01 | 65 | 0.8 |
| Example 5 | Cendust | PPS | 10 | 20.5 | 370 | 260 | 2.09 | < 0.01 | 64 | 0.8 |
| Example 6 | Cendust | PEN-N | 5 | 9.89 | 390 | 340 | 1.95 | < 0.01 | 68 | 0.5 |
| Example 7 | Carbonyl Iron Powder C | PEEK | 10 | 18.3 | 410 | 310 | 1.55 | 0.01 | 53 | 0.1 |
| Example 8 | Carbonyl Iron Powder C | PPS | 10 | 18.3 | 370 | 260 | 1.57 | < 0.01 | 52 | 0.1 |
| Example 9 | Amorphous Alloy | PEN-R | 5 | 20.3 | 380 | 335 | 1.32 | < 0.01 | 180 | 0.1 |
| Example 10 | Mo-Permalloy | PEN-B | 10 | 16.3 | 390 | 345 | 1.45 | < 0.01 | 130 | 0.4 |
| Example 11 | Mo-Permalloy | PPS | 10 | 16.3 | 370 | 262 | 1.56 | < 0.01 | 128 | 0.4 |
| Example 12 | Mn-Zn Ferrite | PEN-R | 5 | 13.1 | 380 | 330 | 1.20 | < 0.01 | 15 | $>10^4$ |

## Claims

1. A process for preparing a resin composition for powder molding, comprising 50 to 97 vol% of a metal or alloy powder and 50 to 3 vol% of a thermoplastic resin having heat resistance and crystallinity,

which process comprises dissolving the thermoplastic resin having heat resistance and crystallinity in a solvent and at the same time, dissolving therein at least one metal or alloy powder selected from iron, brass, nickel silver, stainless steel and aluminum, having an average particle diameter of not more than 500 $\mu$m to prepare a mixture, and then gassifying or evaporating the solvent of the mixture.

2. A process as defined in Claim 1 wherein the metal or alloy powder is surface-treated with not more than 3 vol% of a coupling agent.

3. A process as defined in Claim 1 wherein the thermoplastic resin having heat resistance and crystallinity is polyetheretherketone, polyetherketone, polyphenylenesulfide, polysulfide or polycyanoarylether.

4. A process as defined in Claim 1 wherein the polycyanoarylether has repeating unit represented by the general formula:

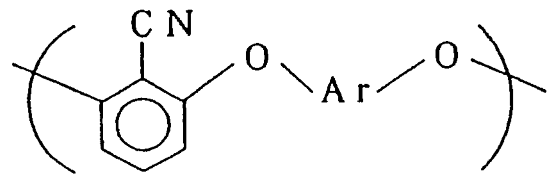

wherein Ar is

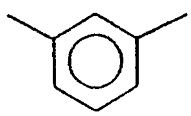 , 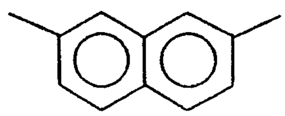 ,

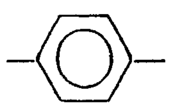 or 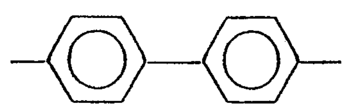

and an intrinsic viscosity [$\eta$] in a solvent of p-chlorophenol at 60$^\circ$C of at least 0.2 dl/g.

5. A process for preparing a resin composition for powder molding, comprising 50 to 97 vol% of a metal or alloy powder and 50 to 3 vol% of a thermoplastic resin having heat resistance and crystallinity, which process comprises dissolving the thermoplastic resin having heat resistance and crystallinity in a solvent and at the same time, dispersing at least one metal or alloy powder selected from iron, brass, nickel silver, stainless steel and aluminum, having an average particle diameter of not more than 500 $\mu$m, cooling the mixture, and then gassifying or evaporating the solvent of the mixture.

6. A process for preparing a resin composition for powder molding, comprising 50 to 97 vol% of a metal or alloy powder and 50 to 3 vol% of a thermoplastic resin having heat resistance and crystallinity, which process comprises dissolving the thermoplastic resin having heat resistance and crystallinity in a solvent and at the same time, dispersing therein at least one metal or alloy powder selected from iron, brass, nickel silver, stainless steel and aluminum, having an average particle diameter of not more than 500 $\mu$m to prepare a mixture, and then cooling the mixture.

7. A process for producing a powder molded product which comprises subjecting the resin composition for powder molding as obtained in any of Claims 1 to 6 to cold compression molding, and then heating the resultant molding at a temperature of not less than the melting point of the thermoplastic resin having heat resistance and crystallinity.